# EUROPEAN PATENT SPECIFICATION

(11) **EP 4 439 781 B1**
(45) Date of publication and mention of the grant of the patent: **06.05.2026**
(21) Application number: 24166224.6
(22) Date of filing: 26.03.2024
(51) Int. Cl.: H01M 10/42, H01M 10/48, H01M 50/569, H01R 12/71, H01R 12/77, H01R 13/639, H01M 50/298

(54) **BATTERY PACK AND CONNECTOR ASSEMBLY**
BATTERIEPACK UND VERBINDERANORDNUNG
BLOC-BATTERIE ET ENSEMBLE CONNECTEUR

(30) Priority: 26.03.2023 KR 20230039385
(43) Date of publication of application: 02.10.2024
(73) Proprietor: Samsung SDI Co., Ltd., Yongin-si, Gyeonggi-do 17084 (KR)
(72) Inventor: Ahn, Jaepil, 17084 Yongin-si, Gyeonggi-do (KR); Kim, Inyong, 15084 Siheung-si, Gyeonggi-do (KR)
(74) Representative: Gulde & Partner

(56) References cited:
- WO-A1-2022/158355
- DE-U1- 202018 107 037
- KR-A- 20210 141 841

## Description

### BACKGROUND

### 1. Field

Aspects of embodiments of the present disclosure relate to a battery pack and a connector assembly.

### 2. Description of the Related Art

Generally, secondary batteries are designed to be charged and discharged, unlike primary batteries that are not designed to be charged. Secondary batteries are used as energy sources for mobile devices, electric vehicles, hybrid vehicles, electric bicycles, uninterruptible power supplies, etc. Depending on the type of external devices to which secondary batteries are to be applied, the secondary batteries may be used in the form of a single battery cell or in the form of a battery pack in which a plurality of battery cells are connected together and bundled into a unit.

A small mobile device, such as a mobile phone, may operate for a certain period of time with the output and capacity of only a single battery. However, when use for a long period of time and/or high power are desired, such as in the case of an electric vehicle or a hybrid vehicle that consumes a lot of power, a battery pack is preferred due to the output and capacity thereof. Also, the output voltage or output current of the battery pack may be increased according to the number of batteries embedded therein.

KR 2021 0141841 A discloses a connector for a flexible cable mounted on a circuit board.

DE 20 2018 107 037 U1 refers to an electrical connector assembly that determines the connections between a power source and a device, thus creating an electrical circuit.

### SUMMARY

The invention is defined in the claims. Embodiments of the present disclosure include a battery pack and a connector assembly. A connector mediates an electrical connection between a detection wire for transmitting state information of battery cells and a circuit unit for collecting the state information of battery cells. The detection wire and the connector are firmly coupled to each other by using a retainer that is placed between the connector and the detection wire, and thus, separation of the detection wire may be effectively prevented. Also, a pressing operation of the connector for detachable fastening with the circuit unit is easily performed, and thus, the workability for the battery pack and the connector assembly may be improved.

Additional aspects and features of the present disclosure will be set forth, in part, in the description that follows and, in part, will be apparent from the description or may be learned by practice of the described embodiments of the present disclosure.

According to an embodiment of the invention, a battery pack includes: a battery cell; a detection wire configured to transmit state information of the battery cell; a connector including a rim edge member and an accommodation member, the rim edge member surrounding an open end configured to receive a connection end of the detection wire, the accommodation member being recessed from the rim edge member in a first direction to enclose the connection end; and a retainer extending across the detection wire in a second direction crossing the first direction and coupled to the open end of the connector from the outside such that the retainer is located between the connector and the detection wire in a third direction crossing both the first direction and the second direction.

The rim edge member may include a first upper block and a first lower block facing each other with the open end therebetween in the third direction. The first upper block may formed stepwise upwardly from a second upper block of the accommodation member, and the first lower block may be formed stepwise downwardly from a second lower block of the accommodation member.

The rim edge member may further include a pair of side blocks that connect the first upper block and the first lower block to each other to surround the open end, and each of the pair of side blocks may include a locking portion configured to be hook-coupled to the retainer.

The first upper block may include fixed blocks on both sides of the first upper block in the second direction and a movable block between the fixed blocks in the second direction.

The movable block may be connected to a support piece such that the movable block is configured to be raised and lowered between a restraint position and a release position according to a pressing operation. The support piece may extend from a hinge coupling portion at a front position of the accommodation member opposite the open end toward a rear position of the accommodation member along the accommodation member and may be pivotably supported about the hinge coupling portion.

The support piece may include a hook configured to attach and detach the connector.

The retainer may include a first plate between the movable block and the connection end of the detection wire in the third direction and at a rear position of the movable block in the first direction to cover the detection wire at a position outside the connector.

The retainer includes: a plate unit extending in the second direction across the connection end of the detection wire and covering the detection wire in a plate shape on a plane formed by the first direction and the second direction; and locking jaw blocks on both sides of the plate unit in the second direction and protruding in the third direction from both sides of the plate unit to prevent separation between the connector and the connection end of the detection wire.

The open end defines a boundary between the inside and the outside of the connector, and the plate unit includes a first plate extending in the second direction across the connection end of the detection wire outside the connector.

The plate unit further includes a second plate extending in the second direction across the connection end of the detection wire inside the connector.

The first and second plates may be arranged at levels offset from each other in the third direction.

The first plate may be at a higher level in the third direction and may be spaced apart from the detection wire outside the connector. The second plate may be at a lower level in the third direction and may be adjacent to the detection wire inside the connector.

The retainer further includes a protruding press bar extending across the connection end of the detection wire in the second direction at the open end between the first and second plates, and the protruding press bar may protrude in the third direction crossing the first and second directions.

Each of the locking jaw blocks may include: a first locking jaw rib configured to prevent separation from the connector; and/or a second locking jaw rib configured to prevent separation from the connection end of the detection wire.

The first locking jaw rib may extend forward in the first direction from each of both sides in the second direction of the plate unit that corresponds to an assembling direction in which the retainer is inserted into the open end.

The first locking jaw rib may be configured to be hook-coupled to a locking portion on the side block of the connector forming the open end.

The second locking jaw rib may extend in the second direction to connect the plate unit extending across the connection end of the detection wire to the first locking jaw rib and may be configured to be hook-coupled to a locking portion in the connection end of the detection wire.

The locking portion of the connection end may protrude from each of both sides of the connection end in the second direction.

The locking jaw block may further include an assembling block for alignment with the connector.

The assembling block and the first locking jaw rib may extend parallel to each other in the first direction, and a lateral accommodation space, into which the side block of the connector is inserted, may be formed between the assembling block and the first locking jaw rib.

The first and second locking jaw ribs may extend in the first and second directions, respectively, to surround the side block, and the first locking jaw rib may be configured to be hook-coupled to a locking portion of the side block.

The assembling block may be formed on the plate unit in the third direction, and the first and second locking jaw ribs may extend across upper and lower portions of the plate unit in the third direction. The first locking jaw rib may be configured to be hook-coupled to the connector above the plate unit, and the second locking jaw rib may be configured to be hook-coupled to the connection end of the detection wire below the plate unit.

According to another embodiment of the present disclosure, a connector assembly includes: a connector and a retainer as described above. The connector includes a rim edge member and an accommodation member, the rim edge member surrounding an open end to receive a connection end of a detection wire for transmitting state information of a battery cell therein, the accommodation member being recessed from the rim edge member in a first direction to enclose the connection end. The retainer extends across the detection wire in a second direction crossing the first direction and coupled to the open end of the connector from the outside such that the retainer is between the connector and the detection wire in a third direction crossing both the first direction and the second direction.

### BRIEF DESCRIPTION OF THE DRAWINGS

The above and other aspects and features of the present disclosure will be more apparent from the following description taken in conjunction with the accompanying drawings, in which:
FIG. 1 is an exploded perspective view of a battery pack according to embodiments of the invention;
FIG. 2 is an enlarged perspective view of the region II in FIG. 1;
FIGS. 3 and 4 are exploded perspective views showing a state in which a detection wire, a retainer, and a connector shown in FIG. 1 are being assembled to each other;
FIGS. 5 to 7 are different perspective views and a plan view of the connector shown in FIG. 1;
FIGS. 8 to 10 are different perspective views and a plan view of the retainer shown in FIG. 1;
FIG. 11 is a plan view of the detection wire shown in FIG. 1;
FIGS. 12 and 13 are perspective views of the connection structure shown in FIG. 2 partially cut along different points;
FIG. 14 is an exploded perspective view showing coupling between the connector and the retainer shown in FIG. 1;
FIG. 15 is an exploded perspective view showing coupling between the detection wire and the retainer shown in FIG. 1; and
FIG. 16 is a perspective view showing a first plate of the retainer that provides a support position for a pressing operation.

### DETAILED DESCRIPTION

Reference will now be made, in detail, to embodiments, examples of which are illustrated in the accompanying drawings.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Hereinafter, a battery pack and a connector assembly according to embodiments of the present disclosure will be described with reference to the accompanying drawings.

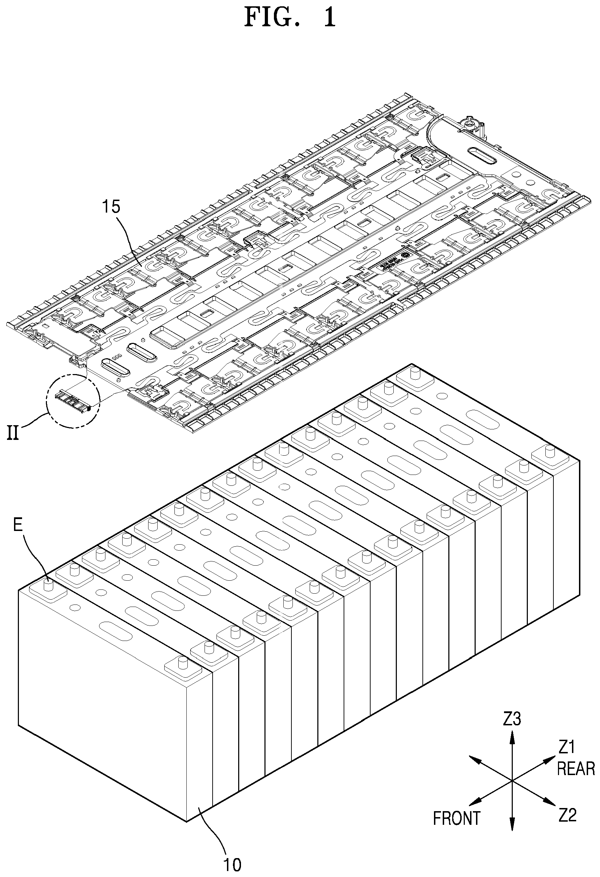

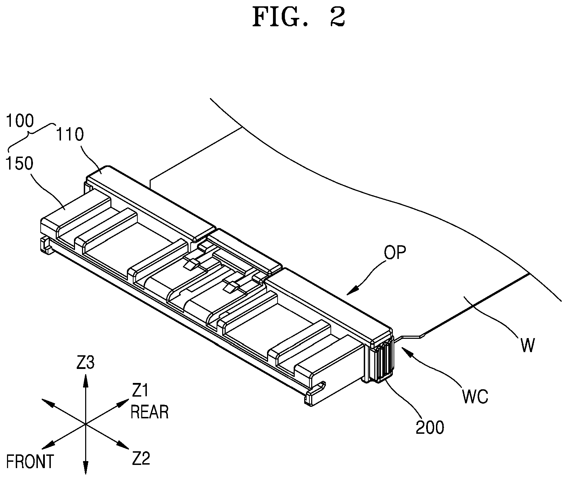

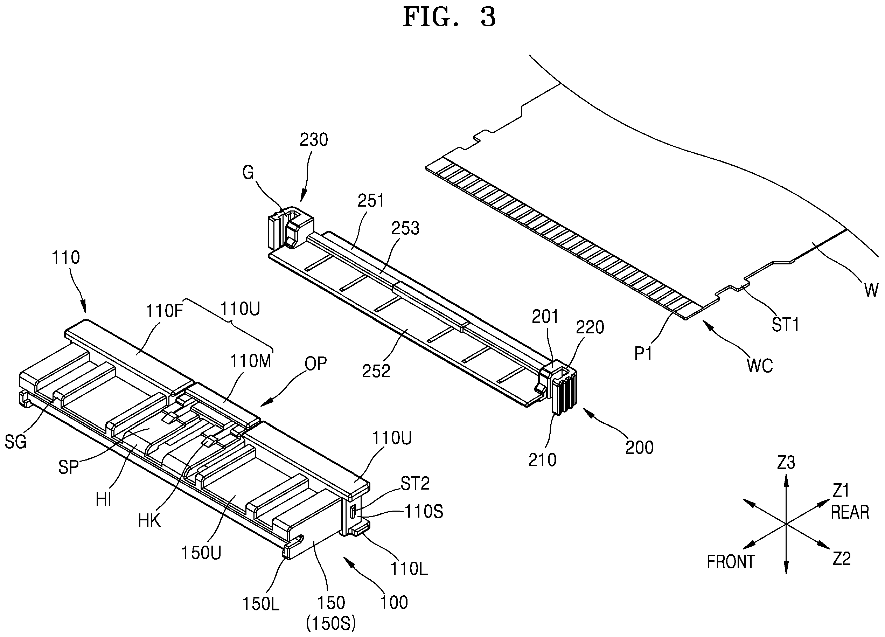

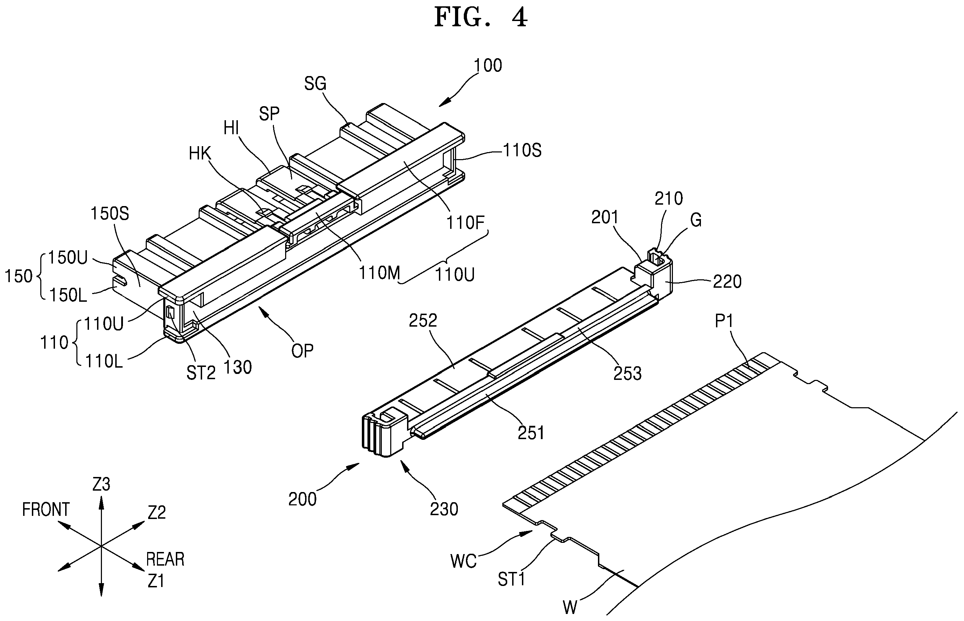

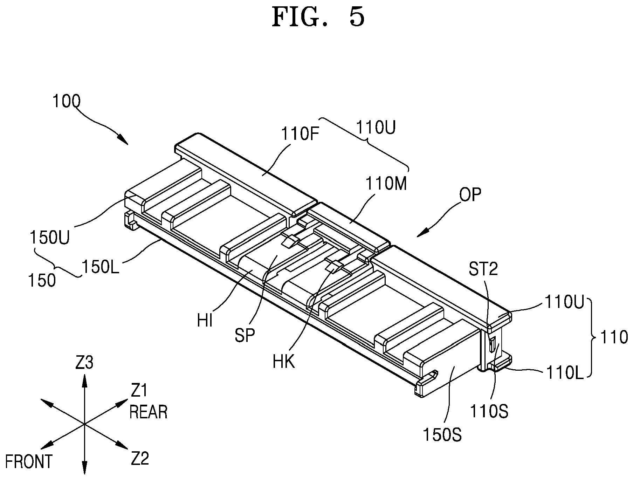

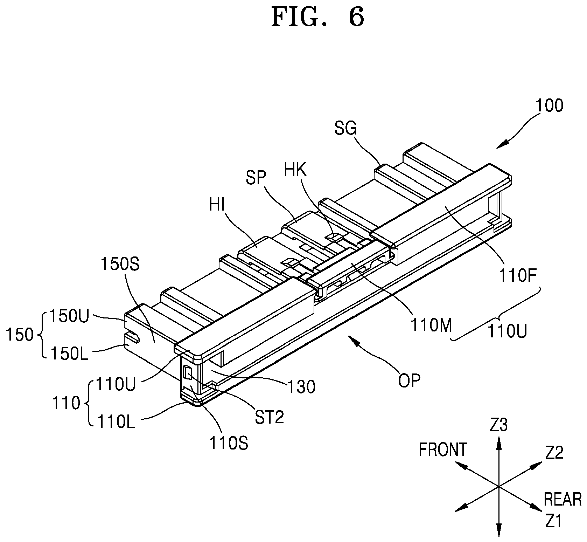

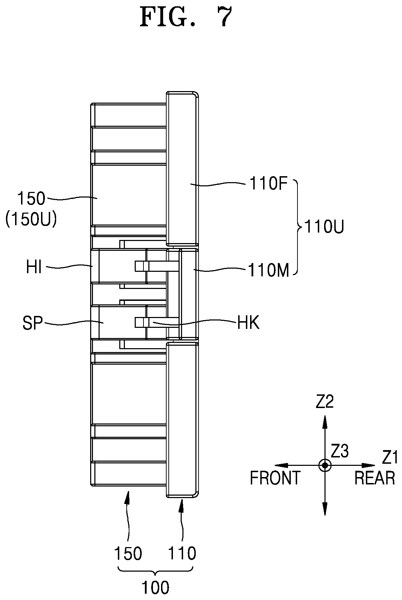

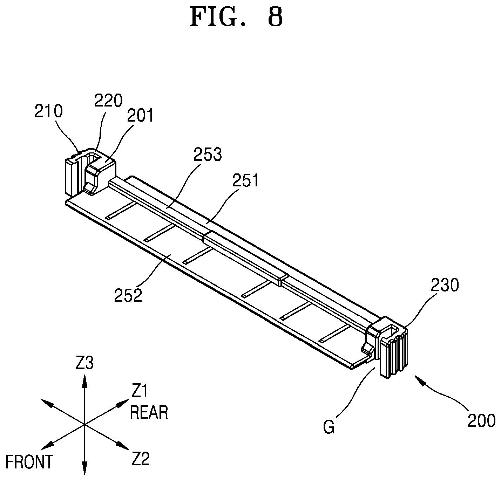

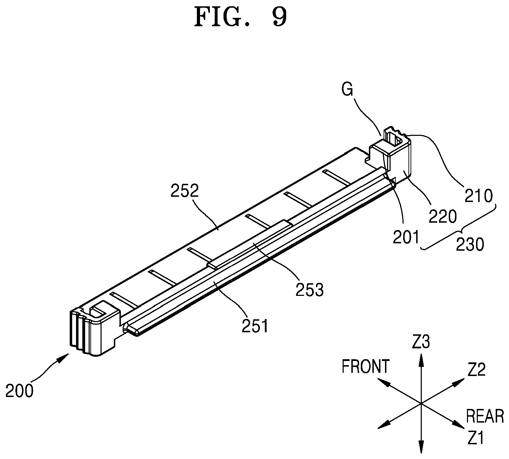

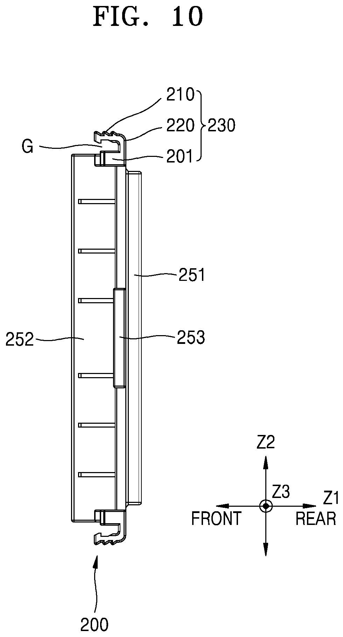

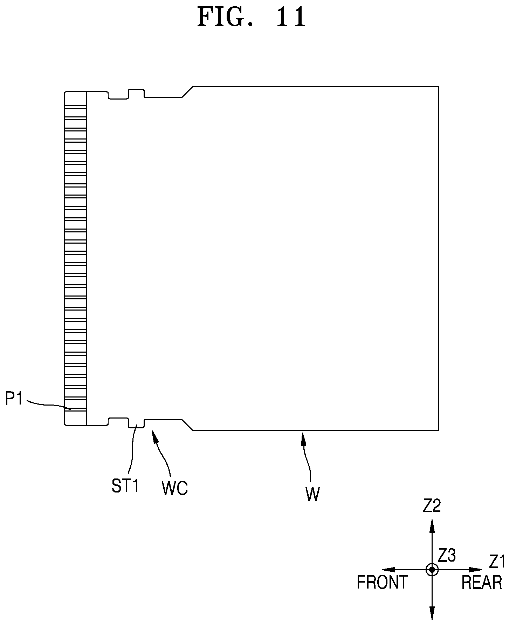

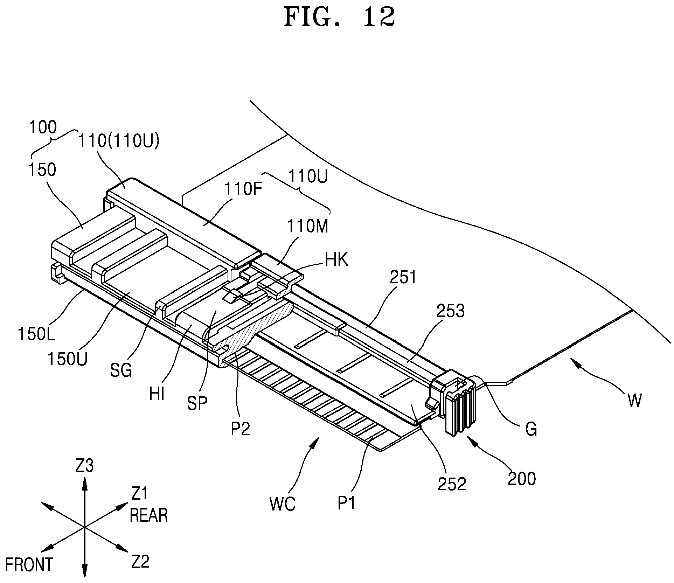

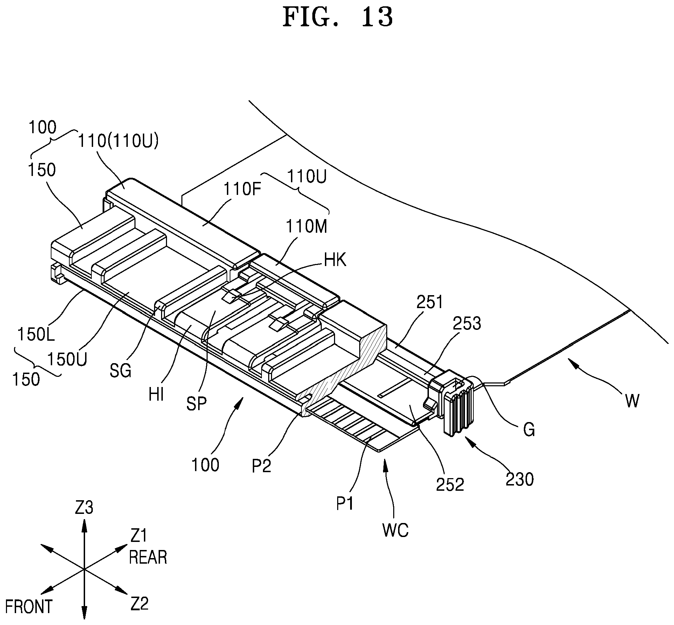

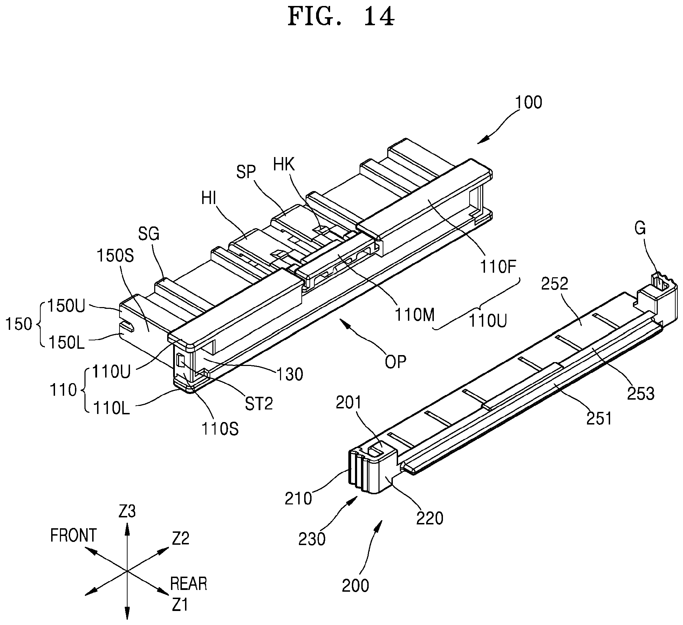

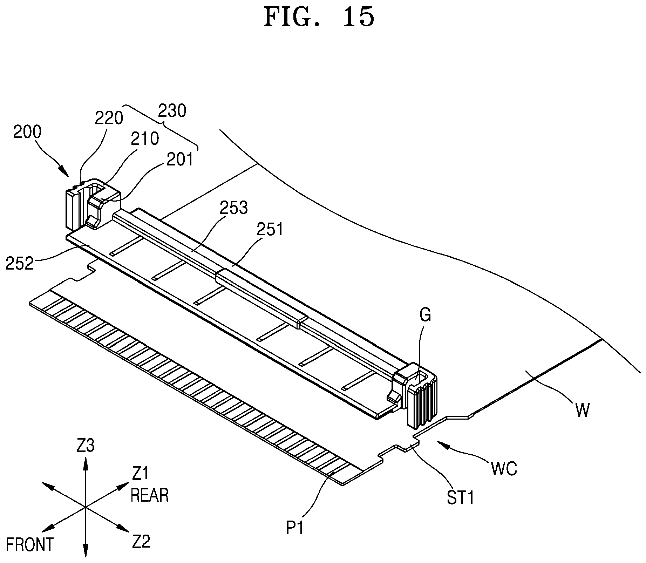

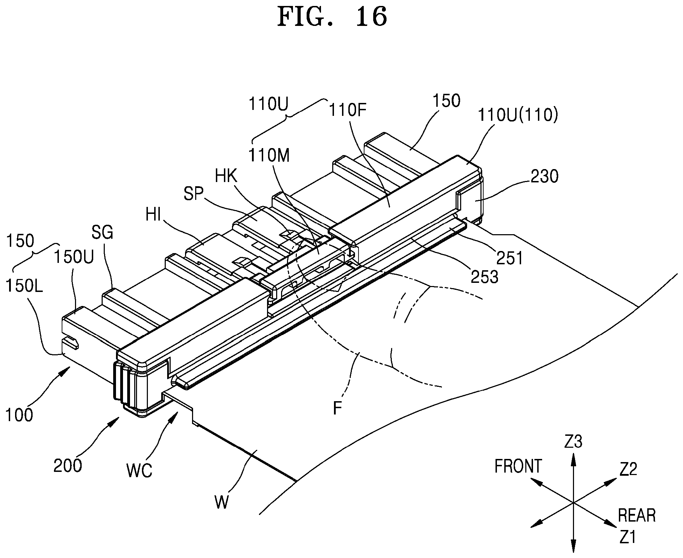

FIG. 1 is an exploded perspective view of a battery pack according to embodiments of the invention. FIG. 2 is an enlarged perspective view of the region II in FIG. 1. FIGS. 3 and 4 are exploded perspective views showing a state in which a detection wire W, a retainer 200, and a connector 100 shown in FIG. 1 are being assembled to each other. FIGS. 5 to 7 are different perspective views and a plan view of the connector 100 shown in FIG. 1. FIGS. 8 to 10 are different perspective views and a plan view of the retainer 200 shown in FIG. 1. FIG. 11 is a plan view of the detection wire W shown in FIG. 1. FIGS. 12 and 13 are different perspective views of FIG. 2 partially cut along different points. FIG. 14 is an exploded perspective view showing a coupling structure between the connector 100 and the retainer 200 shown in FIG. 1. FIG. 15 is an exploded perspective view showing a coupling structure between the detection wire W and the retainer 200 shown in FIG. 1. FIG. 16 is a perspective view illustrating a first plate 251 of the retainer 200 that provides a support position for a pressing operation.

Referring to FIGS. 1 to 16, the battery pack, according to embodiments of the invention includes at least one battery cell 10, a detection wire W through which state information of the battery cells 10 is collected and transmitted, a connector 100 including a rim edge member 110, which surrounds an open end OP open to receive a connection end WC of the detection wire W to be inserted therein, and an accommodation member 150, which is recessed from the rim edge member 110 in a first direction Z1 to enclose the connection end WC, and a retainer 200, which extends across the detection wire W in a second direction Z2 crossing the first direction Z1 and is coupled to the open end OP of the connector 100 from the outside so that the retainer 200 is located between the connector 100 and the detection wire W in a third direction Z3 crossing both the first direction Z1 and the second direction Z2.

In embodiments of the present disclosure, the battery pack may include a plurality of battery cells 10, for example, a plurality of battery cells 10 arranged in one row. In embodiments of the present disclosure, each of the battery cells 10 may include a pair of electrodes E adjacent to each other in the second direction Z2, crossing the first direction Z1 in which the plurality of battery cells 10 are arranged. Also, charging and discharging power of the plurality of battery cells 10 are output toward external loads or input from external chargers toward the battery cells 10 by the electrical connection between the pair of electrodes E and a bus bar 15.

The plurality of battery cells 10 may form electrical connections between different battery cells 10 by using the bus bar 15, and the plurality of battery cells 10 electrically connected to each other using the bus bar 15 may input and output charging and discharging current through input and output terminals. For example, the plurality of battery cells 10 may be connected to external chargers to receive charging power or may output discharging power to external loads. For example, the bus bar 15 may connect the plurality of battery cells 10 in parallel by electrically connecting electrodes E of different battery cells 10 having the same polarity to each other or may connect the plurality of battery cells 10 in series by electrically connecting electrodes E of different battery cells 10 having opposite polarities to each other. The battery pack, according to various embodiments of the present disclosure, may establish a parallel connection between different battery cells 10, a series connection between different battery cells 10, or a mixed series and parallel connection between different battery cells 10.

In embodiments of the present disclosure, the battery pack may further include a circuit unit (e.g., a battery management system (BMS)) for acquiring the state information of the plurality of battery cells 10, such as temperature and voltage. For example, the circuit unit may be included as one component of the battery pack according to embodiments of the present disclosure or may be electrically connected to the battery pack as a component that is separate from the battery pack. The battery pack, according to embodiments of the present disclosure, includes the detection wire W for transmitting state information of the plurality of battery cells 10, and the detection wire W may transmit the state information, collected from the plurality of battery cells 10, toward the circuit unit. In embodiments of the present disclosure, the detection wire W includes the connection end WC that is connected to the connector 100 for connection to the circuit unit.

The detection wire W may extend in the first direction Z1, in which the plurality of battery cells 10 are arranged, and may include the connection end WC connected to the connector 100. For example, the detection wire W may have one end and another end (e.g., an opposite end) in the first direction Z1 in which the battery cells 10 are arranged. The connection end WC formed at one end from among the one end and the other end of the detection wire W may be connected to the connector 100, and the connector 100, to which the connection end WC has been connected, may be connected to a connection part mounted to the circuit unit. Therefore, an electrical connection may be formed between the detection wire W and the circuit unit. In embodiments of the present disclosure, the detection wire W may be provided in the form of a flexible circuit board. For example, the detection wire W may be provided in the form of a flexible circuit board, such as an FFC (flexible flat cable) or an FPC (flexible printed circuit).

In embodiments of the present disclosure, the connection end WC of the detection wire W may be inserted into the connector 100 that mediates electrical connection with the circuit unit. For example, the connection end WC of the detection wire W may form one end thereof in the first direction Z1 corresponding to the length direction of the detection wire W or the arrangement direction of the plurality of battery cells 10, and the one end of the detection wire W may have the same configuration as the remainder of the detection wire W. A uniform configuration may be provided from the connection end WC forming the one end of the detection wire W to the other end of the detection wire W. The detection wire W may include a conductive line and an insulating layer that covers the conductive line, and the connection end WC forming the one end of the detection wire W may also have a configuration including the conductive line and the insulating layer. For example, the connection end WC of the detection wire W may include only the conductive line and the insulating layer but may not include a rigid structure for separately imparting rigidity, such as a housing or rigid circuit board coupled to the connection end WC of the detection wire W. The connection end WC of the detection wire W, having a structure of a flexible circuit board, may be accommodated in the connector 100 and electrically connected to the connector 100. However, as described below, to expose a terminal pattern P1 formed at the front end of the connection end WC and to electrically connect the terminal pattern P1 to a pad pattern P2 of the connector 100 (see, e.g., FIGS. 12 and 13), the insulating layer may be removed from at least the front end of the connection end WC at where the terminal pattern P1 is formed to expose the terminal pattern P1. Because the terminal pattern P1 facing the pad pattern P2 (see, e.g., FIGS. 12 and 13) of the connector 100 is exposed from (or through) the insulating layer, the pad pattern P2 of the connector 100 and the terminal pattern P1 of the connection end WC may be electrically connected to each other. Also, except for the front end of the connection end WC at where the terminal pattern P1 is formed, the detection wire W including the connection end WC extending from the front end of the connection end WC may be protected by the insulating layer.

The connection end WC may include the terminal pattern P1 forming the front end of the connection end WC in the first direction Z1, corresponding to the length direction of the detection wire W, and locking portions ST1 respectively formed on both sides, which are connected to the terminal pattern P1, of the connection end WC. For example, in embodiments of the present disclosure, the locking portions ST1 may be formed on both sides of the connection end WC in the second direction Z2 that crosses the first direction Z1, corresponding to the longitudinal direction of the detection wire W. In embodiments of the present disclosure, the locking portions ST1 may be respectively hook-coupled to second locking jaw ribs 220 of the retainer 200, and the locking portions ST1 protruding in the second direction Z2 from both sides of the connection end WC may respectively come into contact with the second locking jaw ribs 220 extending in the second direction Z2. Therefore, the connection end WC including the locking portions ST1 and the retainer 200 including the second locking jaw ribs 220 may not separate from each other in the first direction Z1.

The connector 100 may include the rim edge member 110, which surrounds the open end OP that receives the connection end WC of the detection wire W to be inserted therein, and the accommodation member 150, which is recessed from the rim edge member 110 in the first direction Z1 to enclose the connection end WC. For example, in embodiments of the present disclosure, the connector 100 may include the accommodation member 150 providing an accommodation space for the connection end WC at a front position, in the first direction Z1, in which the connection end WC of the detection wire W enters and the rim edge member 110 providing the open end OP connected to (e.g., open to) the accommodation space at a rear position in the first direction Z1. The connection end WC of the detection wire W may enter the inside of the connector 100 via the open end OP at the rear position in the first direction Z1 and may be accommodated in the accommodation space connected to the open end OP.

In embodiments of the present disclosure, the rim edge member 110 may include a first upper block 110U and a first lower block 110L that face each other with the open end OP therebetween in the third direction Z3. Similarly, the accommodation member 150 may include a second upper block 150U and a second lower block 150L that face each other with the open end OP therebetween in the third direction Z3. For example, the first upper block 110U of the rim edge member 110 may be formed stepwise upwardly from the second upper block 150U of the accommodation member 150, and the first lower block 110L of the rim edge member 110 may be formed stepwise downwardly from the second lower block 150L of the accommodation member 150. For example, in embodiments of the present disclosure, the rim edge member 110 may form the open end OP of the connector 100. The coupling positions (e.g., the locking portions ST2 that are hook-coupled to first locking jaw ribs 210 of the retainer 200) to the retainer 200 as a component adjacent to the connector 100 may be formed at the open end OP, and a movable block 110M for receiving a pressing operation for detachable coupling to a connection part of a circuit unit may be formed at the open end OP. Therefore, the rim edge member 110 having components related to coupling to neighboring components around the rim edge member 110 may have a relatively large thickness, and thus, a strong and durable coupling to adjacent components may be formed.

The rim edge member 110 may further include a pair of side blocks 110S that connect the first upper block 110U and the first lower block 110L to each other so as to surround the open end OP, and locking portions ST2 hook-coupled to the first locking jaw ribs 210 of the retainer 200 may be respectively formed on the side blocks 110S. For example, the locking portions ST2 of the side blocks 110S may be respectively formed on the outer surfaces of the pair of side blocks 110S arranged in a direction away from each other.

In embodiments of the present disclosure, the first upper block 110U and the first lower block 110L may be integrally coupled to (e.g., integrally formed with) each other by the pair of side blocks 110S that form the connection therebetween. For example, in embodiments of the present disclosure, the pair of side blocks 110S may face each other in the second direction Z2 with the open end OP therebetween into which the connection end WC of the detection wire W is inserted. The pair of side blocks 110S may surround the open end OP together with the first upper block 110U and the first lower block 110L around the open end OP and may form the open end OP into which the connection end WC of the detection wire W is inserted.

In embodiments of the present disclosure, the accommodation member 150 providing an accommodation space, into which the connection end WC of the detection wire W inserted from the front position of the open end OP via the open end OP is accommodated, may include side surfaces 150S that integrally connect the second upper block 150U and the second lower block 150L to each other. The second upper block 150U and the second lower block 150L may be integrally connected to each other by the side surface 150S of the accommodation member 150.

In embodiments of the present disclosure, the first upper block 110U of the rim edge member 110 and the second upper block 150U of the accommodation member 150 may form an upper block of the connector 100, and the first lower block 110L of the rim edge member 110 and the second lower block 150L of the accommodation member 150 may form a lower block of the connector 100.

In embodiments of the present disclosure, the upper block and the lower block may face each other in the third direction Z3 with the open end OP therebetween into which the connection end WC of the detection wire W is inserted. In embodiments of the present disclosure, the connector 100 may accommodate the connection end WC of the detection wire W, include the pad pattern P2 (see, e.g., FIGS. 12 and 13) connected to the terminal pattern P1 of the connection end WC, and form a signal line for transmitting electrical signals of the state information about the battery cells 10 which are transmitted via the detection wire W. In embodiments of the present disclosure, the connection end WC of the detection wire W may include the terminal pattern P1 formed at a front position or at a front end of the detection wire W in the first direction Z1. The connection end WC of the detection wire W may enter the inside of the connector 100, via the open end OP of the connector 100, to the position at where the terminal pattern P1 formed at the front end of the detection wire W overlaps the pad pattern P2 (see, e.g., FIGS. 12 and 13) located in front of the open end OP of the accommodation space. The connection end WC may enter and may be accommodated into the connector 100 from a rear position toward a front position of the connector 100. In embodiments of the present disclosure, the pad pattern P2 (see, e.g., FIGS. 12 and 13) may be formed on the upper block or the lower block of the connector 100, exposed to the terminal pattern P1 formed at the front end of the detection wire W on the upper block or the lower block, and may have a shape protruding toward the terminal pattern P1. In embodiments of the present disclosure, the pad pattern P2 may be selectively formed on the upper block or the lower block of the connector 100. In the upper block of the connector 100, the pad pattern P2 may be formed on the first upper block 110U of the rim edge member 110 and/or the second upper block 150U of the accommodation member 150. In embodiments of the present disclosure, the pad pattern P2 may be formed on the second upper block 150U of the accommodation member 150. In various embodiments of the present disclosure, the pad pattern P2 may extend over the first upper block 110U of the rim edge member 110 and the second upper block 150U of the accommodation member 150.

In embodiments of the present disclosure, the pad pattern P2 (see, e.g., FIGS. 12 and 13) electrically connected to the terminal pattern P1 formed at the front end of the detection wire W may have a shape that protrudes from a side, facing the accommodation space, of the upper block toward the terminal pattern P1. In various embodiments of the present disclosure, the pad pattern P2 may protrude from the second upper block 150U toward the terminal pattern P1. For example, in various embodiments of the present disclosure, to the extent that the pad pattern P2 faces the terminal pattern P1 formed at the front end of the detection wire W and forms an electrical connection therebetween, the pad pattern P2 may be formed on the first upper block 110U of the rim edge member 110 and/or the second upper block 150U of the accommodation member 150, which together form the upper block of the connector 100, and may have a shape protruding from a side, facing the accommodation space, of the first and second upper blocks 110U and 150U toward the terminal pattern P1 formed at the front end of the detection wire W accommodated in the accommodation space. Also, a sliding guide SG for guiding a sliding connection with a connection part of a circuit unit into which the connector 100 is inserted may be provided on the second upper block 150U on the side opposite the pad pattern P2 (see, e.g., FIGS. 12 and 13).

In embodiments of the present disclosure, the first upper block 110U may include fixed blocks 110F on both sides of the first upper block 110U in the second direction Z2 and a movable block 110M between the fixed blocks 110F on both sides of the first upper block 110U. The movable block 110M may be connected to a support piece SP such that the movable block 110M is raised and lowered between a restraint position and a release position according to a pressing operation (e.g., by being pressed downwardly), and the support piece SP extends from a hinge coupling portion HI formed at a front position of the accommodation member 150 opposite the open end OP along the accommodation member 150 and is supported pivotably about the hinge coupling portion HI. In more detail, the first upper block 110U may include the movable block 110M which receives a pressing operation to pivot about the hinge coupling portion HI and is pivotably separated from the fixed blocks 110F, which are blocks different from the movable block 110M in the upper block, to move up and down between the restraint position and the release position in the third direction Z3. For example, the movable block 110M may be pressed to a relatively lower release position while receiving the pressing operation, and the movable block 110M may be restored to an upper restraint position by an elastic restoring force of the hinge coupling portion HI when the pressing operation is removed. The movable block 110M may be raised and lowered between the restraint position and the release position in the third direction Z3 by elastic deformation centered on the hinge coupling portion HI or by elastic restoration accompanying the elastic deformation. Through interlocking with the movable block 110M, the connector 100 and a connection part of a circuit unit may be fastened to each other by a hook HK interlocking with the movable block 110M in the upper restraint position. Also, the connector 100 and the connection part of the circuit unit may be unfastened from each other when the movable block 110M is pressed to the lower release position.

In embodiments of the present disclosure, the movable block 110M may be pivotably connected by the hinge coupling portion HI formed at a front position of the accommodation member 150 opposite to the open end OP, and the movable block 110M may be connected to the hinge coupling portion HI by the support piece SP that extends rearwardly from the hinge coupling portion HI and may be pivotally connected by the hinge coupling portion HI. The hinge coupling portion HI may be formed at a front position of the upper block in the first direction Z1, for example, at a front position of the second upper block 150U of the accommodation member 150. The hinge coupling portion HI may be supported pivotably about the hinge coupling portion HI by the support piece SP that extends onto the second upper block 150U from the hinge coupling portion HI formed at the front position of the second upper block 150U. For example, the movable block 110M may be connected to the hinge coupling portion HI by a pair of support pieces SP extending parallel to each other in the first direction Z1 and spaced apart from each other in the second direction Z2, and the hinge coupling portion HI may also be provided in a pair spaced apart from each other in the second direction Z2. In embodiments of the present disclosure, hooks HK may be respectively formed on the pair of support pieces SP, and fastening strength between the connector 100 and the connection part of the circuit unit may be maintained in a balanced manner due to the pair of hooks HK formed on the pair of support pieces SP. In response to the pressing pressure applied to the movable block 110M, displacement of the movable block 110M may be appropriately maintained between the restraint position and the release position by the pair of hinge coupling portions HI and the pair of support pieces SP extending side by side from the pair of hinge coupling portions HI. The hooks HK on the support piece SP interlocked with the movable block 110M according to the displacement of the movable block 110M may be interlocked between a position at which physical interference with the connection part is possible, and a position at which the physical interference with the connection part is removed (or ceases).

The movable block 110M may be formed at a central position of the first upper block 110U extending in the second direction Z2, and the movable block 110M may be separated from the fixed blocks 110F formed on both sides in the second direction Z2 by clearance spaces and may be configured to receive a pressing operation. For example, the first upper block 110U of the rim edge member 110 forming the open end OP may include the movable block 110M formed at the central position of the rim edge member 110 for receiving the pressing operation and the pair of fixed blocks 110F formed on both sides of the movable block 110M. Also, the movable block 110M may be supported pivotably about the hinge coupling portion HI by the support piece SP that extends in the first direction Z1, while floating by a height from (or above) the accommodation member 150 (e.g., the second upper block 150U), from the hinge coupling portion HI formed at the front position of the connector 100. For example, the movable block 110M may be connected to the hinge coupling portion HI by the support piece SP that is raised to a height from the accommodation member 150 in the first direction Z1. The movable block 110M may be separated from the fixed blocks 110F by the clearance spaces in the second direction Z2. By being separated from other components of the connector 100, the movable block 110M may be elastically deformed and lowered according to a pressing operation or may be elastically restored and raised concurrently (or simultaneously) with removal of the pressing operation. In embodiments of the present disclosure, the support piece SP may extend rearwardly from the hinge coupling portion HI; for example, the support piece SP may be supported in the form of a cantilever beam to be pivotable about the hinge coupling portion HI located at the front position.

As described below, the retainer 200 may be coupled, from the outside of the connector 100, to the open end OP of the connector 100 into which the connection end WC of the detection wire W is inserted. The retainer 200 may include a first plate 251, which is located between the movable block 110M and the detection wire W in the third direction Z3 and at a rear position of the movable block 110M in the first direction Z1, to cover the detection wire W located at a position outside the connector 100. In embodiments of the present disclosure, the first plate 251 may provide a support position (or a support surface) for a pressing operation that assists the pressing operation of the movable block 110M below the movable block 110M formed on the upper block. For example, as shown in FIG. 16, an operator performing the pressing operation for attachment and detachment between the connector 100 and the connection part of the circuit unit may concurrently (or simultaneously) contact the movable block 110M and the first plate 251 formed below the movable block 110M and may press the movable block 110M with the first plate 251 acting as a support position for the pressing operation. Therefore, the pressing operation may be conveniently performed. For example, in embodiments of the present disclosure, the movable block 110M may be elastically deformed and lowered to the release position according to the pressing operation and may be elastically restored and raised to the restraint position according to the removal of the pressing operation. To make this pressing operation more convenient, the first plate 251 below the movable block 110M may be located at a position that is on a diagonal line protruding from the movable block 110M and concurrently (or simultaneously) following the first direction Z1 and the third direction Z3 with the movable block 110M. Therefore, the pressing operation on the movable block 110M may be conveniently performed by using the first plate 251 as a support position.

In embodiments of the present disclosure, the retainer 200 includes plate units 251 and 252, which extend in the second direction Z2 across the connection end WC of the detection wire W and cover the detection wire W, having a plate shape on a plane formed by the first direction Z1 in which the connection end WC of the detection wire W extends and the second direction Z2, and locking jaw blocks 230, which are located on both sides of the plate units 251 and 252 in the second direction Z2 and protrude in the third direction Z3 from both sides of the plate units 251 and 252 to prevent separation between the connector 100 and the connection end WC of the detection wire W, which are adjacent to the retainer 200.

In embodiments of the present invention, a boundary between the inside and outside of the connector 100 is formed on the basis of the open end OP, which is open toward the outside of the connector 100 and into which the connection end WC of the detection wire W is inserted. The plate units 251 and 252 may include a first plate 251, which extends in the second direction Z2 across the connection end WC of the detection wire W at a position outside the connector 100, and a second plate 252, which extends in the second direction Z2 across the connection end WC of the detection wire W at a position inside the connector 100. For example, in embodiments of the present disclosure, the plate units 251 and 252 including the first and second plates 251 and 252 may occupy (or may form) the largest area in the retainer 200. The first and second plates 251 and 252 may be arranged at different positions in the first direction Z1, for example, may be respectively arranged at different rear and front positions in the first direction Z1 in which the connection end WC of the detection wire W extends. In embodiments of the present disclosure, the first direction Z1 may correspond to a direction in which the connection end WC of the detection wire W is inserted into the open end OP of the connector 100 and/or a direction in which the retainer 200 is inserted into the open end OP of the connector 100. The retainer 200 may be inserted into the open end OP in the first direction Z1 onto the detection wire W which has been inserted into the open end OP of the connector 100 in the first direction Z1. In the retainer 200, the first plate 251 at a relatively rear position may cover the detection wire W outside the open end OP, for example, at a position outside the connector 100, and the second plate 252 at a relatively front position may cover the detection wire W inside the open end OP, for example, at a position inside the connector 100.

In embodiments of the invention, the retainer 200 includes a protruding press bar 253 formed at a position overlapping the open end OP in the first direction Z1. Also, the first and second plates 251 and 252 respectively formed behind and in front of the protruding press bar 253 may be at positions deviating from the open end OP. For example, the first plate 251 may be formed at the rear position deviating from the open end OP (e.g., the position outside the connector 100), and the second plate 252 may be formed at the front position deviating from the open end OP (e.g., the position inside the connector 100).

In embodiments of the present disclosure, the first and second plates 251 and 252 may be arranged at levels offset from each other in the third direction Z3. For example, the first plate 251 may be at a higher level that is spaced relatively far from the detection wire W at the position outside the connector 100, and the second plate 252 may be at a lower level that is relatively adjacent to the detection wire W at the position inside the connector 100.

For example, in embodiments of the present disclosure, the first and second plates 251 and 252 may be arranged at different positions in the first direction Z1, and the protruding press bar 253 may be formed between the first and second plates 251 and 252 in the first direction Z1. Also, the first and second plates 251 and 252 may be formed at positions offset from each other in the third direction Z3 on the basis of the protruding press bar 253, and the first and second plates 251 and 252, respectively formed on the outside and inside of the connector 100, may have different functions. For example, the first plate 251 may be formed at a level spaced apart from the detection wire W exposed to the position outside the connector 100, for example, at a relatively higher level spaced apart from (e.g., above) the detection wire W in the third direction Z3 by a height, and thus, the detection wire W may be protected from external impact. For example, the first plate 251 covering a portion of the detection wire W exposed to the outside of the connector 100 may protect the detection wire W against an external impact that may be applied from the outside of the connector 100. Also, the first plate 251 spaced apart from the detection wire W in the third direction Z3 by a height may conform to an external impact. For example, even if pressed (e.g., instantaneously pressed) in the third direction Z3, the first plate 251 may not directly contact the detection wire W because the first plate 251 is spaced apart from the detection wire W by a height in the third direction Z3. Therefore, the detection wire W may be reliably protected.

As illustrated in FIG. 16, the first plate 251 may provide the support position for the pressing operation that assists the pressing operation of the movable block 110M and may be below the movable block 110M formed on the upper block. An operator performing the pressing operation for attachment and detachment between the connector 100 and the connection part of the circuit unit may concurrently (or simultaneously) contact the movable block 110M and the first plate 251 formed below the movable block 110M and may press the movable block 110M with the first plate 251 acting as a support position (or support surface) for the pressing operation. Therefore, the pressing operation may be conveniently performed. Therefore, in embodiments of the present disclosure, the first plate 251, providing a support position for the movable block 110M on which the pressing operation is performed, may be formed at a position relatively spaced apart from the detection wire W by a height, and thus, the detection wire W may be protected from the pressing operation performed by the operator. For example, the detection wire W may be protected by preventing the first plate 251, which may be lowered (e.g., instantaneously lowered) by the pressing operation, from coming into contact with the detection wire W.

The retainer 200 includes the protruding press bar 253 between the first and second plates 251 and 252 in the first direction Z1. The protruding press bar 253 protrudes in the third direction Z3, from the plate units 251 and 252 including the first and second plates 251 and 252 toward the upper block of the connector 100 that forms the open end OP into which the connection end WC of the detection wire W is inserted. The protruding press bar 253 fills a gap between the upper block of the connector 100 and the connection end WC. The connection end WC may be pressed within the open end OP of the connector 100 by the protruding press bar 253, and thus, accidental separation of the connection end WC from the connector 100 may be prevented.

The first and second plates 251 and 252 may not protrude toward the open end OP (e.g., the upper block forming the open end OP), similar to the protruding press bar 253, but may be provided in the form substantially parallel to the connection end WC of the detection wire W and overlapping the connection end WC. For example, the protruding press bar 253 may be force fitted with the connection end WC. However, the plate units 251 and 252 including the first and second plates 251 and 252 may contribute to co-planarity of the detection wire W, rather than forming the forced fitting of the connection end WC like the protruding press bar 253. For example, the first and second plates 251 and 252 may extend to the outside and inside of the connector 100, respectively, from the protruding press bar 253 or the open end OP in which the protruding press bar 253 is arranged. Therefore, wrinkles of the detection wire W arranged inside and outside the connector 100 may be prevented and the co-planarity thereof may be maintained. For example, in the retainer 200, the plate units 251 and 252 including the first and second plates 251 and 252 may be formed relatively closer to the lower block of the connector 100 than the upper block, and the protruding press bar 253 may protrude relatively closer to the upper block than the plate units 251 and 252.

The forced fitting of the detection wire W by the protruding press bar 253, according to embodiments of the present disclosure, is described in more detail. The retainer 200 may be coupled to the open end OP of the connector 100 through which the connection end WC of the detection wire W enters. The protruding press bar 253 of the retainer 200 may press the connection end WC, which is accommodated via the open end OP of the connector 100, to prevent the connection end WC from being separated and may firmly maintain the coupled state of the connection end WC. For example, in embodiments of the present disclosure, the retainer 200 may be coupled to the open end OP of the connector 100 into which the connection end WC is inserted. The protruding press bar 253 of the retainer 200 may be located between the upper block of the connector 100 and the connection end WC while being in contact with the same at a pressure to prevent the connection end WC from being separated. For example, in embodiments of the present disclosure, the protruding press bar 253 of the retainer 200 may be force-fit into the open end OP into which the connection end WC is inserted and may fill a gap between the connection end WC and the open end OP, and thus, the connection between the connection end WC and the open end OP may not be loosened. Also, the connection end WC and the open end OP may come into close contact with each other, and thus, the connection end WC may not be separated via the open end OP.

In embodiments of the present disclosure, the retainer 200 may fill a gap in the open end OP, into which the connection end WC is inserted, by using the protruding press bar 253 and may be coupled via (or in) the gap. Also, the retainer 200 may form (or may improve or ensure) the forced fitting connection between the connection end WC and the open end OP. Also, the retainer 200 may structurally prevent the separation of the connection end WC by using the locking jaw blocks 230 that extend across the locking portions ST1 formed in the connection end WC. In more detail, the retainer 200 may include the locking jaw blocks 230 that have the second locking jaw ribs 220 extending across the locking portions ST1 formed in the connection end WC.

In embodiments of the present disclosure, the locking jaw blocks 230 may be located on both sides of the plate units 251 and 252 in the second direction Z2 and may protrude in the third direction Z3 from both sides of the plate units 251 and 252 to prevent separation between the connector 100 and the connection end WC of the detection wire W, which are adjacent to the retainer 200. Each of the locking jaw blocks 230 may include a first locking jaw rib 210 for preventing separation from the connector 100 and a second locking jaw rib 220 for preventing separation from the connection end WC of the detection wire W. In embodiments of the present disclosure, the first and second locking jaw ribs 210 and 220 may extend in the first and second directions Z1 and Z2, respectively, to surround a side block 110S of the connector 100, and the first locking jaw rib 210 may be hook-coupled to a locking portion ST2 of the side block 110S. For example, the first locking jaw ribs 210 may extend forward from both sides of the plate units 251 and 252 in the first direction Z1 corresponding to the assembling direction in which the retainer 200 is inserted into the open end OP. Also, the first locking jaw ribs 210 may be hook-coupled to the locking portions ST2 formed on the side blocks 110S that form the open end OP. The second locking jaw ribs 220 may extend in the second direction Z2 to connect the plate units 251 and 252 extending across the connection end WC of the detection wire W to the first locking jaw ribs 210 and may be hook-coupled to the locking portions ST1 formed in the connection end WC of the detection wire W. For example, the locking portions ST1 of the connection end WC may protrude from both sides of the connection end WC in the second direction Z2. Both the second locking jaw ribs 220 and the locking portions ST1 of the connection end WC, which are hook-coupled to each other, may extend in the second direction Z2 and may prevent the retainer 200 including the second locking jaw ribs 220 and the detection wire W including the connection end WC from separating from each other in the first direction Z1.

In embodiments of the present disclosure, each of the locking jaw blocks 230 may further include an assembling block 201 for alignment with the connector 100. For example, in embodiments of the present disclosure, the assembling block 201 may be inserted into an assembling space 130 formed in the upper block (e.g., the first upper block 110U of the rim edge member 110) of the connector 100, and thus, the positions between the retainer 200 including the assembling block 201 and the connector 100 including the upper block may be aligned. For example, in embodiments of the present disclosure, the assembling block 201 and the first locking jaw rib 210 may extend parallel to each other in the first direction Z1, and a lateral accommodation space G, into which the side block 110S of the connector 100 is inserted, may be formed between the assembling block 201 and the first locking jaw rib 210. For example, the first locking jaw rib 210 may be hook-coupled to the locking portion ST2 of the side block 110S accommodated in the lateral accommodation space G.

The hook coupling between the first locking jaw rib 210 and the side block 110S, according to embodiments of the present disclosure, is described in more detail. The first locking jaw rib 210 may be hook-coupled to the locking portion ST2 formed on the side block 110S, and thus, the retainer 200 including the first locking jaw rib 210 and the connector 100 including the side block 110S may not be separated from each other. For example, the first locking jaw rib 210 and the locking portion ST2 of the side block 110S may have inclined surfaces that are complementary to each other. The first locking jaw rib 210 and the side block 110S may be prevented from separating from each other by using a separation-preventing surface that forms the contour connected to the inclined surfaces, and the inclined surface may have a relatively small slope and the separation-preventing surface may extend relatively steeply to avoid interfering with coupling between the first locking jaw rib 210 and the side block 110S. For example, the inclined surfaces of the first locking jaw rib 210 and the side block 110S may be inclined in the first direction Z1 and may allow the first locking jaw rib 210 and the side block 110S to be coupled to each other in the first direction Z1. Also, the separation-preventing surfaces of the first locking jaw rib 210 and the side block 110S may be formed in a direction generally perpendicular to the first direction Z1 and may prevent the first locking jaw rib 210 and the side block 110S from separating from each other in the first direction Z1. The retainer 200 may be coupled to the open end OP of the connector 100 in the first direction Z1. The side block 110S may enter the lateral accommodation space G formed between the assembling block 201 and the first locking jaw rib 210 of the retainer 200 to accommodate the side block 110S forming the open end OP of the connector 100. The locking portion ST2 of the side block 110S and the first locking jaw ribs 210 bending toward the lateral accommodation space G may be hook-coupled to each other.

The hook coupling between the second locking jaw rib 220 and the connection end WC of the detection wire W, according to embodiments of the present disclosure, is described in more detail. The second locking jaw rib 220 may be hook-coupled to the connection end WC of the detection wire W, and thus, the retainer 200 including the second locking jaw rib 220 and the detection wire W may be prevented from separating from each other. For example, the locking portions ST1 may be formed in the connection end WC of the detection wire W. The retainer 200 may be coupled to the open end OP into which the connection end WC of the detection wire W is inserted, and the second locking jaw rib 220 of the retainer 200 may extend in the second direction Z2 across a locking portion ST1 formed in the connection end WC. The second locking jaw rib 220 and the locking portion ST1 of the connection end WC may be hook-coupled to each other.

The position alignment between assembling blocks 201 and the connector 100, according to embodiments of the present disclosure, is described in more detail. The assembling blocks 201 may be respectively inserted into assembling spaces 130 formed on both sides of the upper block (e.g., the first upper block 110U of the rim edge member 110). An assembling space 130 spaced apart from the side block 110S may be formed in the upper block. Because the assembling blocks 201 are inserted into the assembling spaces 130 of the upper block, the positions between the connector 100 including the upper block and the retainer 200 including the assembling blocks 201 may be aligned to each other. In embodiments of the present disclosure, the coupling between the retainer 200 and the connector 100 may be established both by the position alignment between the assembling blocks 201 of the retainer 200 and the assembling spaces 130 of the connector 100 and by the hook coupling between the first locking jaw ribs 210 of the retainer 200 and the locking portions ST2 of the connector 100.

In embodiments of the present disclosure, the assembling blocks 201 may be formed on the plate units 251 and 252 and may protrude from the plate units 251 and 252 in the third direction Z3. The first and second locking jaw ribs 210 and 220 may extend across the lower and upper portions of the plate units 251 and 252 in the third direction Z3. The first locking jaw ribs 210 may be hook-coupled to the locking portions ST2 of the side blocks 110S above the plate units 251 and 252, and the second locking jaw ribs 220 may be hook-coupled to the connection end WC of the detection wire W below the plate units 251 and 252.

In embodiments of the present disclosure, the assembling blocks 201 may be formed on the plate units 251 and 252 in the third direction Z3. For example, the fact that the assembling block 201 is formed on the plate units 251 and 252 may indicate that the assembling block 201 is formed on either the first plate 251 or the second plate 252 or is formed across the first and second plates 251 and 252 on both the first and second plates 251 and 252. For example, the above may ~indicate that the assembling block 201 is formed over the protruding press bar 253 adjacent to the first plate 251 or the second plate 252.

In embodiments of the present disclosure, that the locking jaw block 230 extends across the plate units 251 and 252 may indicate that portions of the first and second locking jaw ribs 210 and 220 are formed at a higher level than the plate units 251 and 252 in the third direction Z3 and that other portions of the first and second locking jaw ribs 210 and 220 are formed at a lower level than the plate units 251 and 252. In embodiments of the present disclosure, it may be understood that the upper and lower blocks of the connector 100 are arranged respectively above and below the connection end WC in the third direction Z3 on the basis of the connection end WC of the detection wire W that enters via the open end OP. On the basis of the plate units 251 and 252 located at a level adjacent to the connection end WC of the detection wire W, the assembling block 201 inserted into the assembling space 130 of the upper block located above the plate units 251 and 252 may be formed on the plate units 251 and 252 to face the upper block. Different from the assembling block 201, the first and second locking jaw ribs 210 and 220 may extend across the plate units 251 and 252 and may include portions formed above the plate units 251 and 252 in the third direction Z3 and other portions formed below the plate units 251 and 252. To form the hook coupling to the locking portions ST2 of the connector 100 located above the plate units 251 and 252 and the hook coupling to the locking portions ST1 formed in the connection end WC of the detection wire W located below the plate units 251 and 252, the first and second locking jaw ribs 210 and 220 may be formed across the upper and lower portions of the plate units 251 and 252.

Based on the overall shape of the retainer 200, the retainer 200 may include the first and second plates 251 and 252 extending toward the outside and inside of the connector 100, respectively, at levels offset from each other in the third direction Z3, on the basis of the protruding press bar 253 formed at the position of the open end OP in the first direction Z1. Also, the retainer 200 may include the pair of locking jaw blocks 230 formed on both sides, in the second direction Z2, of the plate units 251 and 252 including the first and second plates 251 and 252. Each of the locking jaw blocks 230 may include the assembling block 201 formed on the plate units 251 and 252 in the third direction Z3 and the first and second locking jaw ribs 210 and 220 extending across the plate units 251 and 252 in the third direction Z3.

Also, a connector assembly, according to embodiments of the present disclosure, may include a connector 100 and a retainer 200. The connector 100 may include the rim edge member 110, which surrounds the open end OP opened so that the connection end WC of the detection wire W for transmitting the state information of the battery cells 10 can be inserted therein, and the accommodation member 150, which is recessed from the rim edge member 110 in the first direction Z1 to enclose the connection end WC. The retainer 200 may extend across the detection wire W in the second direction Z2 crossing the first direction Z1 and may be coupled to the open end OP of the connector 100 from the outside so that the retainer 200 is located between the connector 100 and the detection wire W in the third direction Z3 crossing both the first direction Z1 and the second direction Z2.

Aspects and features of the connector 100 and the retainer 200 forming the connector assembly are substantially the same as or similar to those described above, and thus, repeated descriptions thereof are omitted. For example, the connector assembly, according to embodiments of the present disclosure, may include components, such as the connector 100 and the retainer 200, which are substantially the same as or similar to those described with reference to the battery pack according to embodiments of the present disclosure. However, the connector assembly may not include the battery cells 10 and the detection wire W for transmitting the state information of the battery cells 10 from among the components of the battery pack described above.

According to embodiments of the present disclosure, the battery pack and the connector assembly may be provided. The connector may mediate an electrical connection between the detection wire for transmitting the state information of the battery cells and the circuit unit for collecting the state information of the battery cells. The detection wire and the connector may be firmly coupled to each other by using the retainer that is placed between the connector and the detection wire, and thus, the detection wire may not separate from the connector. Also, the pressing operation of the connector for detachable fastening with the circuit unit may be easily performed, and thus, the workability for the battery pack and the connector assembly may be improved.

It should be understood that the embodiments described herein should be considered in a descriptive sense and not for purposes of limitation as long as not departing from the scope of the appended claims.

## Claims

1. A battery pack comprising:
a battery cell (10);
a detection wire (W) configured to transmit state information of the battery cell (10);
a connector (100) comprising a rim edge member (110) and an accommodation member (150), the rim edge member (110) surrounding an open end (OP) configured to receive a connection end (WC) of the detection wire (W), the accommodation member (150) being recessed from the rim edge member (110) in a first direction (Z1) to enclose the connection end (WC); and
a retainer (200) extending across the detection wire (W) in a second direction (Z2) crossing the first direction (Z1) and coupled to the open end (OP) of the connector (100) from the outside such that the retainer (200) is located between the connector (100) and the detection wire (W) in a third direction (Z3) crossing both the first direction (Z1) and the second direction (Z2),
**characterized in that** the retainer (200) comprises:
a plate unit (251, 252) extending in the second direction (Z2) across the connection end (WC) of the detection wire (W) and covering the detection wire (W) in a plate shape on a plane formed by the first direction (Z1) and the second direction (Z2); and
locking jaw blocks (230) on both sides of the plate unit (251, 252) in the second direction (Z2) and protruding in the third direction (Z3) from both sides of the plate unit (251, 252) to prevent separation between the connector (100) and the connection end (WC) of the detection wire (W),
wherein the open end (OP) defines a boundary between the inside and the outside of the connector (100), and
wherein the plate unit (251, 252) comprises:
a first plate (251) extending in the second direction (Z2) across the connection end (WC) of the detection wire (W) outside the connector (100) and
a second plate (252) extending in the second direction (Z2) across the connection end (WC) of the detection wire (W) inside the connector (100),
wherein the retainer (200) further comprises a protruding press bar (253) extending across the connection end (WC) of the detection wire (W) in the second direction (Z2) at the open end (OP) between the first and second plates (251, 252), the protruding press bar (253) protruding in the third direction (Z3) crossing the first and second directions (Z1, Z2) and filling a gap between the connection end (WC) and the open end (OP).

2. The battery pack as claimed in claim 1, wherein the rim edge member (110) comprises a first upper block (110U) and a first lower block (110L) facing each other with the open end (OP) therebetween in the third direction (Z3),
wherein the first upper block (110U) is formed stepwise upwardly from a second upper block (150U) of the accommodation member (150), and
wherein the first lower block (110L) is formed stepwise downwardly from a second lower block (150L) of the accommodation member (150).

3. The battery pack as claimed in claim 2, wherein the rim edge member (110) further comprises a pair of side blocks (110S) that connect the first upper block (110U) and the first lower block (110L) to each other to surround the open end (OP), and
wherein each of the pair of side blocks (110S) comprises a locking portion (ST2) configured to be hook-coupled to the retainer (200).

4. The battery pack as claimed in claim 2 or 3, wherein the first upper block (110U) comprises fixed blocks (110F) on both sides of the first upper block (110U) in the second direction (Z2) and a movable block (110M) between the fixed blocks (110F) in the second direction (Z2).

5. The battery pack as claimed in claim 4, wherein the movable block (110M) is connected to a support piece (SP) such that the movable block (110M) is configured to be raised and lowered between a restraint position and a release position according to a pressing operation, and
wherein the support piece (SP) extends from a hinge coupling portion (HI) at a front position of the accommodation member (150) opposite the open end (OP) toward a rear position of the accommodation member (150) along the accommodation member (150) and is pivotably supported about the hinge coupling portion (HI),
wherein the support piece (SP) comprises a hook (HK) configured to attach the connector (100) to a circuit unit and detach the connector (100) from the circuit unit.

6. The battery pack as claimed in claim 4 or 5, wherein the retainer (200) comprises a first plate (251) between the movable block (110M) and the connection end (WC) of the detection wire (W) in the third direction (Z3) and at a rear position of the movable block (110M) in the first direction (Z1) to cover the detection wire (W) at a position outside the connector (100).

7. The battery pack as claimed in claim 3 wherein the first and second plates (151, 252) are arranged at levels offset from each other in the third direction (Z3),
wherein the first plate (251) is at a higher level in the third direction (Z3) and is spaced apart from the detection wire (W) outside the connector (100), and the second plate (252) is at a lower level in the third direction (Z3) and is adjacent to the detection wire (W) inside the connector (100).

8. The battery pack as claimed in claim 7, wherein each of the locking jaw blocks (230) of the retainer (200) comprises:
a first locking jaw rib (210) configured to prevent separation from the connector (100);
wherein the first locking jaw rib (210) extends forward in the first direction (Z1) from each of both sides in the second direction (Z2) of the plate unit (251, 252) that corresponds to an assembling direction in which the retainer (200) is inserted into the open end (OP) and/or
wherein the first locking jaw rib (210) is configured to be hook-coupled to a locking portion (ST2) on the side block (110S) of the connector (100) forming the open end (OP).

9. The battery pack as claimed in claim 7 or 8, wherein each of the locking jaw blocks (230) of the retainer (200) comprises a second locking jaw rib (220) configured to prevent separation from the connection end (WC) of the detection wire (W);
wherein the second locking jaw rib (220) extends in the second direction (Z2) to connect the plate unit (251, 252) extending across the connection end (WC) of the detection wire (W) to the first locking jaw rib (210) and is configured to be hook-coupled to a locking portion (ST1) in the connection end (WC) of the detection wire (W),
wherein the locking portion (ST1) of the connection end (WC) protrudes from each of both sides of the connection end (WC) in the second direction (Z2).

10. The battery pack as claimed in any one of claims 7, 8 and 9, wherein the locking jaw block (230) further comprises an assembling block (201) for alignment with the connector (100.

11. The battery pack as claimed in claim 10, wherein the assembling block (201) and the first locking jaw rib (210) extend parallel to each other in the first direction (Z1), and
wherein a lateral accommodation space, into which the side block (110S) of the connector (100) is inserted, is formed between the assembling block (201) and the first locking jaw rib (210).

12. The battery pack as claimed in claim 11, wherein the first and second locking jaw ribs (210, 220) extend in the first and second directions (Z1, Z2), respectively, to surround the side block (110S), and
wherein the first locking jaw rib (210) is configured to be hook-coupled to a locking portion (ST2) of the side block (110S).

13. The battery pack as claimed in any one of claims 10 to 12, wherein the assembling block (201) is formed on the plate unit (251, 252) in the third direction (Z3), and
wherein the first and second locking jaw ribs (210, 220) extend across upper and lower portions of the plate unit in the third direction (Z3), the first locking jaw rib (210) is configured to be hook-coupled to the connector (100) above the plate unit (251, 252), and the second locking jaw rib (220) is configured to be hook-coupled to the connection end (WC) of the detection wire (W) below the plate unit (251, 252).

## Patentansprüche

1. Batteriepack, umfassend:
eine Batteriezelle (10);
eine Detektionsleitung (W), die dazu ausgelegt ist, Zustandsinformationen der Batteriezelle (10) zu übertragen;
einen Steckverbinder (100), umfassend ein Randkantenbauteil (110) und ein Aufnahmebauteil (150), wobei das Randkantenbauteil (110) ein offenes Ende (OP) umgibt, das dazu ausgelegt ist, ein Verbindungsende (WC) der Detektionsleitung (W) aufzunehmen, wobei das Aufnahmebauteil (150) in einer ersten Richtung (Z1) vom Randkantenbauteil (110) zurückgesetzt ist, um das Verbindungsende (WC) einzuschließen; und
ein Haltelement (200), das sich in einer zweiten Richtung (Z2), die die erste Richtung (Z1) kreuzt, über die Detektionsleitung (W) erstreckt und von außen an das offene Ende (OP) des Steckverbinders (100) gekoppelt ist, sodass das Haltelement (200) in einer dritten Richtung (Z3), die sowohl die erste Richtung (Z1) als auch die zweite Richtung (Z2) kreuzt, zwischen dem Steckverbinder (100) und der Detektionsleitung (W) angeordnet ist,
**dadurch gekennzeichnet, dass** das Haltelement (200) Folgendes umfasst:
eine Platteneinheit (251, 252), die sich in der zweiten Richtung (Z2) über das Verbindungsende (WC) der Detektionsleitung (W) erstreckt und die Detektionsleitung (W) in Plattenform auf einer Ebene, die durch die erste Richtung (Z1) und die zweite Richtung (Z2) gebildet wird, abdeckt; und
Verriegelungsklauenblöcke (230) an beiden Seiten der Platteneinheit (251, 252) in der zweiten Richtung (Z2) und in der dritten Richtung (Z3) von beiden Seiten der Platteneinheit (251, 252) vorstehend, um eine Trennung zwischen dem Steckverbinder (100) und dem Verbindungsende (WC) der Detektionsleitung (W) zu verhindern,
wobei das offene Ende (OP) eine Grenze zwischen dem Inneren und dem Äußeren des Steckverbinders (100) definiert, und
wobei die Platteneinheit (251, 252) Folgendes umfasst:
eine erste Platte (251), die sich in der zweiten Richtung (Z2) über das Verbindungsende (WC) der Detektionsleitung (W) außerhalb des Steckverbinders (100) erstreckt, und
eine zweite Platte (252), die sich in der zweiten Richtung (Z2) über das Verbindungsende (WC) der Detektionsleitung (W) innerhalb des Steckverbinders (100) erstreckt,
wobei das Haltelement (200) ferner eine vorstehende Druckleiste (253) umfasst, die sich in der zweiten Richtung (Z2) über das Verbindungsende (WC) der Detektionsleitung (W) am offenen Ende (OP) zwischen der ersten und der zweiten Platte (251, 252) erstreckt, wobei die vorstehende Druckleiste (253) in der dritten Richtung (Z3), die die erste und zweite Richtung (Z1, Z2) kreuzt, vorsteht und einen Spalt zwischen dem Verbindungsende (WC) und dem offenen Ende (OP) ausfüllt.

2. Batteriepack nach Anspruch 1, wobei das Randkantenbauteil (110) einen ersten oberen Block (110U) und einen ersten unteren Block (110L) umfasst, die einander mit dem offenen Ende (OP) dazwischen in der dritten Richtung (Z3) gegenüberliegen,
wobei der erste obere Block (110U) stufenförmig aufwärts von einem zweiten oberen Block (150U) des Aufnahmebauteils (150) ausgebildet ist, und
wobei der erste untere Block (110L) stufenförmig abwärts von einem zweiten unteren Block (150L) des Aufnahmebauteils (150) ausgebildet ist.

3. Batteriepack nach Anspruch 2, wobei das Randkantenbauteil (110) ferner ein Paar Seitenblöcke (110S) umfasst, die den ersten oberen Block (110U) und den ersten unteren Block (110L) miteinander verbinden, um das offene Ende (OP) zu umgeben, und
wobei jeder der Seitenblöcke (110S) einen Verriegelungsabschnitt (ST2) umfasst, der dazu ausgelegt ist, hakenartig mit dem Haltelement (200) gekoppelt zu werden.

4. Batteriepack nach Anspruch 2 oder 3, wobei der erste obere Block (110U) feststehende Blöcke (110F) an beiden Seiten des ersten oberen Blocks (110U) in der zweiten Richtung (Z2) und einen beweglichen Block (110M) zwischen den feststehenden Blöcken (110F) in der zweiten Richtung (Z2) umfasst.

5. Batteriepack nach Anspruch 4, wobei der bewegliche Block (110M) mit einem Stützstück (SP) verbunden ist, sodass der bewegliche Block (110M) je nach Druckbetätigung zwischen einer Halteposition und einer Freigabeposition angehoben und abgesenkt werden kann, und
wobei das Stützstück (SP) sich von einem Gelenkkopplungsabschnitt (HI) an einer vorderen Position des Aufnahmebauteils (150) gegenüber dem offenen Ende (OP) zu einer hinteren Position des Aufnahmebauteils (150) entlang des Aufnahmebauteils (150) erstreckt und schwenkbar um den Gelenkkopplungsabschnitt (HI) gelagert ist,
wobei das Stützstück (SP) einen Haken (HK) umfasst, der dazu ausgelegt ist, dass er den Steckverbinder (100) an einer Schaltungseinheit befestigt und den Steckverbinder (100) von der Schaltungseinheit löst.

6. Batteriepack nach Anspruch 4 oder 5, wobei das Haltelement (200) eine erste Platte (251) zwischen dem beweglichen Block (110M) und dem Verbindungsende (WC) der Detektionsleitung (W) in der dritten Richtung (Z3) und an einer hinteren Position des beweglichen Blocks (110M) in der ersten Richtung (Z1) umfasst, um die Detektionsleitung (W) an einer Position außerhalb des Steckverbinders (100) abzudecken.

7. Batteriepack nach Anspruch 3, wobei die erste und zweite Platte (151, 252) in der dritten Richtung (Z3) versetzt zueinander angeordnet sind,
wobei die erste Platte (251) in der dritten Richtung (Z3) auf einem höheren Niveau liegt und außerhalb des Steckverbinders (100) von der Detektionsleitung (W) beabstandet ist, und wobei die zweite Platte (252) in der dritten Richtung (Z3) auf einem niedrigeren Niveau liegt und innerhalb des Steckverbinders (100) an die Detektionsleitung (W) angrenzt.

8. Batteriepack nach Anspruch 7, wobei jeder der Verriegelungsklauenblöcke (230) des Haltelements (200) Folgendes umfasst:
eine erste Verriegelungsklauenrippe (210), die dazu ausgelegt ist, eine Trennung vom Steckverbinder (100) zu verhindern;
wobei die erste Verriegelungsklauenrippe (210) in der ersten Richtung (Z1) vorwärts von jeder der beiden Seiten in der zweiten Richtung (Z2) der Platteneinheit (251, 252) verläuft, die einer Montagerichtung entspricht, in der das Haltelement (200) in das offene Ende (OP) eingeführt wird, und/oder
wobei die erste Verriegelungsklauenrippe (210) dazu ausgelegt ist, hakenartig mit einem Verriegelungsabschnitt (ST2) an dem Seitenblock (110S) des Steckverbinders (100), der das offene Ende (OP) bildet, gekoppelt zu werden.

9. Batteriepack nach Anspruch 7 oder 8, wobei jeder der Verriegelungsklauenblöcke (230) des Haltelements (200) eine zweite Verriegelungsklauenrippe (220) umfasst, die dazu ausgelegt ist, eine Trennung vom Verbindungsende (WC) der Detektionsleitung (W) zu verhindern;
wobei sich die zweite Verriegelungsklauenrippe (220) in der zweiten Richtung (Z2) erstreckt, um die Platteneinheit (251, 252), die sich über das Verbindungsende (WC) der Detektionsleitung (W) erstreckt, mit der ersten Verriegelungsklauenrippe (210) zu verbinden, und dass sie dazu ausgelegt ist, hakenartig mit einem Verriegelungsabschnitt (ST1) im Verbindungsende (WC) der Detektionsleitung (W) gekoppelt zu werden,
wobei der Verriegelungsabschnitt (ST1) des Verbindungsendes (WC) von jeder der beiden Seiten des Verbindungsendes (WC) in der zweiten Richtung (Z2) vorsteht.

10. Batteriepack nach einem der Ansprüche 7, 8 und 9, wobei der Verriegelungsklauenblock (230) ferner einen Montageblock (201) zur Ausrichtung mit dem Steckverbinder (100) umfasst.

11. Batteriepack nach Anspruch 10, wobei der Montageblock (201) und die erste Verriegelungsklauenrippe (210) parallel zueinander in der ersten Richtung (Z1) verlaufen, und
wobei ein seitlicher Aufnahmeraum, in den der Seitenblock (110S) des Steckverbinders (100) eingeführt wird, zwischen dem Montageblock (201) und der ersten Verriegelungsklauenrippe (210) gebildet wird.

12. Batteriepack nach Anspruch 11, wobei die erste und zweite Verriegelungsklauenrippe (210, 220) jeweils in der ersten bzw. zweiten Richtung (Z1, Z2) verlaufen, um den Seitenblock (110S) zu umgeben, und
wobei die erste Verriegelungsklauenrippe (210) dazu ausgelegt ist, hakenartig mit einem Verriegelungsabschnitt (ST2) des Seitenblocks (110S) gekoppelt zu werden.

13. Batteriepack nach einem der Ansprüche 10 bis 12, wobei der Montageblock (201) in der dritten Richtung (Z3) an der Platteneinheit (251, 252) ausgebildet ist, und
wobei die erste und zweite Verriegelungsklauenrippe (210, 220) über obere und untere Abschnitte der Platteneinheit in der dritten Richtung (Z3) verlaufen, wobei die erste Verriegelungsklauenrippe (210) dazu ausgelegt ist, oberhalb der Platteneinheit (251, 252) hakenartig mit dem Steckverbinder (100) gekoppelt zu werden, und wobei die zweite Verriegelungsklauenrippe (220) dazu ausgelegt ist, unterhalb der Platteneinheit (251, 252) hakenartig mit dem Verbindungsende (WC) der Detektionsleitung (W) gekoppelt zu werden.

## Revendications

1. Bloc-batterie comportant :
une cellule de batterie (10) ;
un fil de détection (W) configuré pour transmettre des informations d'état de la cellule de batterie (10) ;
un connecteur (100) comportant un organe de bord de rebord (110) et un organe de logement (150), l'organe de bord de rebord (110) entourant une extrémité ouverte (OP) configurée pour recevoir une extrémité de connexion (WC) du fil de détection (W), l'organe de logement (150) étant en retrait de l'organe de bord de rebord (110) dans une première direction (Z1) pour enfermer l'extrémité de connexion (WC) ; et
un dispositif de retenue (200) s'étendant à travers le fil de détection (W) dans une deuxième direction (Z2) croisant la première direction (21) et couplé à l'extrémité ouverte (OP) du connecteur (100) de l'extérieur de sorte que le dispositif de retenue (200) soit situé entre le connecteur (100) et le fil de détection (W) dans une troisième direction (Z3) croisant à la fois la première direction (Z1) et la deuxième direction (Z2),
**caractérisé en ce que** le dispositif de retenue (200) comporte :
une unité de plaque (251, 252) s'étendant dans la deuxième direction (Z2) à travers l'extrémité de connexion (WC) du fil de détection (W) et recouvrant le fil de détection (W) en forme de plaque sur un plan formé par la première direction (Z1) et la deuxième direction (Z2) ; et
des blocs de mâchoire de verrouillage (230) des deux côtés de l'unité de plaque (251, 252) dans la deuxième direction (Z2) et faisant saillie dans la troisième direction (Z3) depuis les deux côtés de l'unité de plaque (251, 252) pour empêcher une séparation entre le connecteur (100) et l'extrémité de connexion (WC) du fil de détection (W),
dans lequel l'extrémité ouverte (OP) définit une limite entre l'intérieur et l'extérieur du connecteur (100), et
dans lequel l'unité de plaque (251, 252) comporte :
une première plaque (251) s'étendant dans la deuxième direction (Z2) à travers l'extrémité de connexion (WC) du fil de détection (W) à l'extérieur du connecteur (100) et
une deuxième plaque (252) s'étendant dans la deuxième direction (Z2) à travers l'extrémité de connexion (WC) du fil de détection (W) à l'intérieur du connecteur (100),
dans lequel le dispositif de retenue (200) comporte en outre une barre de pression (253) saillante s'étendant à travers l'extrémité de connexion (WC) du fil de détection (W) dans la deuxième direction (Z2) à l'extrémité ouverte (OP) entre les première et deuxième plaques (251, 252), la barre de pression (253) saillante faisant saillie dans la troisième direction (Z3) croisant les première et deuxième directions (Z1, Z2) et comblant un espace entre l'extrémité de connexion (WC) et l'extrémité ouverte (OP).

2. Bloc-batterie selon la revendication 1, dans lequel l'organe de bord de rebord (110) comporte un premier bloc supérieur (110U) et un premier bloc inférieur (110L) se faisant face avec l'extrémité ouverte (OP) entre eux dans la troisième direction (Z3),
dans lequel le premier bloc supérieur (110U) est formé progressivement vers le haut à partir d'un deuxième bloc supérieur (150U) de l'organe de logement (150), et
dans lequel le premier bloc inférieur (110L) est formé progressivement vers le bas à partir d'un deuxième bloc inférieur (150L) de l'organe de logement (150).

3. Bloc-batterie selon la revendication 2, dans lequel l'organe de bord de rebord (110) comporte en outre une paire de blocs latéraux (110S) qui connectent le premier bloc supérieur (110U) et le premier bloc inférieur (110L) l'un à l'autre pour entourer l'extrémité ouverte (OP), et
dans lequel chacun de la paire de blocs latéraux (110S) comporte une partie de verrouillage (ST2) configurée pour être couplée en crochet au dispositif de retenue (200).

4. Bloc-batterie selon la revendication 2 ou 3, dans lequel le premier bloc supérieur (110U) comporte des blocs fixes (110F) des deux côtés du premier bloc supérieur (110U) dans la deuxième direction (Z2) et un bloc mobile (110M) entre les blocs fixes (110F) dans la deuxième direction (Z2).

5. Bloc-batterie selon la revendication 4, dans lequel le bloc mobile (110M) est connecté à une pièce de support (SP) de sorte que le bloc mobile (110M) est configuré pour être relevé et abaissé entre une position de retenue et une position de libération selon une opération de pression, et
dans lequel la pièce de support (SP) s'étend à partir d'une partie de couplage à charnière (HI) à une position avant de l'organe de logement (150) opposée à l'extrémité ouverte (OP) vers une position arrière de l'organe de logement (150) le long de l'organe de logement (150) et est supportée de manière pivotante autour de la partie de couplage à charnière (HI),
dans lequel la pièce de support (SP) comporte un crochet (HK) configuré pour fixer le connecteur (100) à une unité de circuit et détacher le connecteur (100) de l'unité de circuit.

6. Bloc-batterie selon la revendication 4 ou 5, dans lequel le dispositif de retenue (200) comporte une première plaque (251) entre le bloc mobile (110M) et l'extrémité de connexion (WC) du fil de détection (W) dans la troisième direction (Z3) et à une position arrière du bloc mobile (110M) dans la première direction (Z1) pour recouvrir le fil de détection (W) à une position à l'extérieur du connecteur (100).

7. Bloc-batterie selon la revendication 3, dans lequel les première et deuxième plaques (151, 252) sont agencées à des niveaux décalés les uns des autres dans la troisième direction (Z3),
dans lequel la première plaque (251) se trouve à un niveau supérieur dans la troisième direction (Z3) et est espacée du fil de détection (W) à l'extérieur du connecteur (100), et la deuxième plaque (252) se trouve à un niveau inférieur dans la troisième direction (Z3) et est adjacente au fil de détection (W) à l'intérieur du connecteur (100).

8. Bloc-batterie selon la revendication 7, dans lequel chacun des blocs de mâchoire de verrouillage (230) du dispositif de retenue (200) comporte :
une première nervure de mâchoire de verrouillage (210) configurée pour empêcher la séparation du connecteur (100) ;
dans lequel la première nervure de mâchoire de verrouillage (210) s'étend vers l'avant dans la première direction (Z1) à partir de chacun des deux côtés dans la deuxième direction (Z2) de l'unité de plaque (251, 252) qui correspond à une direction d'assemblage dans laquelle le dispositif de retenue (200) est inséré dans l'extrémité ouverte (OP) et/ou
dans lequel la première nervure de mâchoire de verrouillage (210) est configurée pour être couplée en crochet à une partie de verrouillage (ST2) sur le bloc latéral (110S) du connecteur (100) formant l'extrémité ouverte (OP).

9. Bloc-batterie selon la revendication 7 ou 8, dans lequel chacun des blocs de mâchoire de verrouillage (230) du dispositif de retenue (200) comporte une deuxième nervure de mâchoire de verrouillage (220) configurée pour empêcher la séparation de l'extrémité de connexion (WC) du fil de détection (W) ;
dans lequel la deuxième nervure de mâchoire de verrouillage (220) s'étend dans la deuxième direction (Z2) pour connecter l'unité de plaque (251, 252) s'étendant à travers l'extrémité de connexion (WC) du fil de détection (W) à la première nervure de mâchoire de verrouillage (210) et est configurée pour être couplée en crochet à une partie de verrouillage (ST1) dans l'extrémité de connexion (WC) du fil de détection (W),
dans lequel la partie de verrouillage (ST1) de l'extrémité de connexion (WC) fait saillie de chacun des deux côtés de l'extrémité de connexion (WC) dans la deuxième direction (Z2).

10. Bloc-batterie selon l'une quelconque des revendications 7, 8 et 9, dans lequel le bloc de mâchoire de verrouillage (230) comporte en outre un bloc d'assemblage (201) pour l'alignement avec le connecteur (100).

11. Bloc-batterie selon la revendication 10, dans lequel le bloc d'assemblage (201) et la première nervure de mâchoire de verrouillage (210) s'étendent parallèlement l'un à l'autre dans la première direction (Z1), et
dans lequel un espace de logement latéral, dans lequel le bloc latéral (110S) du connecteur (100) est inséré, est formé entre le bloc d'assemblage (201) et la première nervure de mâchoire de verrouillage (210).

12. Bloc-batterie selon la revendication 11, dans lequel les première et deuxième nervures de mâchoire de verrouillage (210, 220) s'étendent dans les première et deuxième directions (Z1, Z2), respectivement, pour entourer le bloc latéral (110S), et
dans lequel la première nervure de mâchoire de verrouillage (210) est configurée pour être couplée en crochet à une partie de verrouillage (ST2) du bloc latéral (110S).

13. Bloc-batterie selon l'une quelconque des revendications 10 à 12, dans lequel le bloc d'assemblage (201) est formé sur l'unité de plaque (251, 252) dans la troisième direction (Z3), et
dans lequel les première et deuxième nervures de mâchoire de verrouillage (210, 220) s'étendent à travers des parties supérieure et inférieure de l'unité de plaque dans la troisième direction (Z3), la première nervure de mâchoire de verrouillage (210) est configurée pour être couplée en crochet au connecteur (100) au-dessus de l'unité de plaque (251, 252), et la deuxième nervure de mâchoire de verrouillage (220) est configurée pour être couplée en crochet à l'extrémité de connexion (WC) du fil de détection (W) sous l'unité de plaque (251, 252).
